# FASCICULE DE BREVET EUROPEEN

(11) **EP 0 579 109 B1**
(45) Date de publication et mention de la délivrance du brevet: **28.01.1998**
(21) Numéro de dépôt: 93110907.8
(22) Date de dépôt: 08.07.1993
(51) Int. Cl.: C01B 15/029, B01J 8/02, B01J 8/00

(54) **Procédé pour la fabrication de peroxyde d'hydrogène par synthèse directe à partir d'hydrogène et d'oxygène**
Verfahren zur Herstellung von Wasserstoffperoxid bei direkter Synthese aus Wasserstoff und Sauerstoff
Process for production of hydrogen peroxide by direct synthesis from hydrogen and oxygen

(30) Priorité: 15.07.1992 BE 9200657
(43) Date de publication de la demande: 19.01.1994
(73) Titulaire: SOLVAY INTEROX (Société Anonyme), B-1050 Bruxelles (BE)
(72) Inventeur: Germain, Albert, B-4000 Liege (BE); Pirard, Jean-Paul, B-4032 Liege (Chenee) (BE); Delattre, Véronique, B-7000 Mons (BE); Van Weynbergh, Jacques, B-1020 Bruxelles (BE); Vogels, Claude, B-1380 Lasne (BE)
(74) Mandataire: Decamps, Alain René François

(56) Documents cités:
- GB-A- 1 056 126
- US-A- 5 169 618
- JOURNAL OF APPLIED ELECTROCHEMISTRY. vol. 9, 1979, LONDON GB pages 117 - 123 C. OLOMAN ET AL. 'Hydrogen peroxide production in trickle-bed reactors'
- CANADIAN JOURNAL OF CHEMICAL ENGINEERING vol. 54, Décembre 1976, pages 551 - 555 S.GOTO ET AL. 'The role of mass-transfer in Trickle-Bed reactors'

## Description

La présente invention concerne un procédé pour la synthèse directe du peroxyde d'hydrogène à partir d'hydrogène et d'oxygène. Elle s'adresse plus particulièrement à un procédé pour la synthèse de peroxyde d'hydrogène par catalyse hétérogène.

Il est connu de produire une solution aqueuse de peroxyde d'hydrogène par réduction électrochimique d'oxygène dans une cellule de type "trickle-bed" (C. Oloman et al. Journal of Applied Electrochemistry 9, pages 117-123, Londres 1979).

Ce procédé connu présente cependant le désavantage de nécessiter la mise en oeuvre d'une source de courant électrique de grande intensité qui n'est pas toujours disponible sur le lieu de production de la solution de peroxyde d'hydrogène.

L'invention vise à remédier à cet inconvénient du procédé connu en fournissant un procédé qui permette la production d'une solution de peroxyde d'hydrogène à partir d'hydrogène et d'oxygène gazeux sans nécessiter la mise en oeuvre d'une source de courant électrique, dans des conditions de bonne sécurité et avec une sélectivité élevée par rapport à l'hydrogène consommé.

Le document EP-A- 366419 décrit la production d'une solution aqueuse de peroxyde d'hydrogène par synthèse directe sur catalyseur hétérogène solide s'effectuant en continu à co-courants dans un réacteur "trickle bed".

L'invention concerne un procédé pour la fabrication d'une solution aqueuse de peroxyde d'hydrogène par synthèse directe à partir d'hydrogène et d'oxygène dans un système triphasique selon lequel on fait réagir directement l'hydrogène et l'oxygène à l'état gazeux à la surface d'un catalyseur hétérogène solide, la réaction s'effectuant en continu dans un réacteur à lit fixe arrosé ("trickle bed") rempli de particules solides du catalyseur constituant le lit fixe au travers duquel on fait ruisseler à co-courants un liquide constitué d'une solution aqueuse et la phase gazeuse contenant l'hydrogène et l'oxygène, caractérisé en ce que le rapport du débit gazeux au débit liquide n'est pas inférieur à 500 et ne dépasse pas 10.000.

Par synthèse directe d'une solution aqueuse de peroxyde d'hydrogène, on entend désigner la synthèse de solutions d'H₂O₂ dans l'eau à partir de ses éléments, à savoir l'oxygène et l'hydrogène. Selon l'invention, ces deux réactifs sont mis en oeuvre dans des conditions réglées pour qu'ils se présentent à l'état gazeux, la pression étant toutefois choisie égale ou supérieure à la pression atmosphérique.

Selon l'invention, la réaction s'effectue en continu dans un réacteur à lit fixe arrosé ("trickle bed"). Par ce type de réacteur, on entend désigner un réacteur triphasique dans lequel un liquide et un gaz circulent à co-courant du haut vers le bas à travers un lit fixe de particules catalytiques solides poreuses au contact desquelles ils réagissent. Dans ce réacteur, le liquide s'écoule en un film à la surface des particules, tandis que le gaz forme la phase continue.

Les deux réactifs gazeux, oxygène et hydrogène, sont mis en contact, dans le procédé selon l'invention, avec la solution aqueuse qui ruisselle à la surface du lit fixe constitué des particules de catalyseur. L'oxygène et l'hydrogène gazeux peuvent aussi être dilués dans un gaz inerte. Par gaz inerte, on entend désigner un gaz qui ne réagit pas avec l'oxygène et l'hydrogène, ni avec le catalyseur et le peroxyde d'hydrogène produit. Des exemples de ces gaz inertes sont l'azote, les gaz rares et l'anhydride carbonique. L'azote a donné de bons résultats.

Le catalyseur conforme au procédé selon l'invention appartient à la classe des catalyseurs solides utilisés en catalyse hétérogène, c'est-à-dire une catalyse qui s'exerce à l'interface entre le solide catalytique et une ou plusieurs autres phases contenant les réactifs. Selon l'invention, le catalyseur solide est maintenu au contact avec une phase aqueuse liquide capable de recueillir et de solubiliser le peroxyde d'hydrogène formé.

Le catalyseur comprend au moins un métal du groupe VIII imprégné sur un support. Le palladium ou l'association du palladium avec un autre métal du groupe VIII a donné de bons résultats.

Lorsque le catalyseur comprend une association du palladium avec un ou plusieurs autres métaux du groupe VIII, il convient que l'autre métal soit réparti de façon homogène dans la masse du palladium. La répartition homogène de l'autre métal peut être réalisée à l'échelle atomique, par exemple lorsque l'association se présente sous la forme d'un alliage homogène.

La répartition du ou des autres métaux peut aussi être réalisée à une échelle plus macroscopique comme, par exemple, la dispersion de petits agglomérats de l'autre métal dans le palladium, ou encore la formation d'une fine couche d'enrobant de l'autre métal autour des grains de palladium.

L'autre métal sera de préférence choisi parmi le platine, le rhodium et l'or. Il peut aussi consister en un mélange de ces métaux. Parmi ces métaux, l'or est préféré. La proportion en poids de l'autre métal dans l'association peut varier dans de larges limites. Il est avantageux qu'elle n'excède pas environ 80 % du poids total des métaux du catalyseur et, de préférence, environ 60 % du poids total de ces métaux.

La proportion pondérale de palladium ou d'association de palladium avec un ou plusieurs autres métaux du groupe VIII par rapport au support doit, dans le catalyseur conforme au procédé selon l'invention, être au moins égale à environ 0,1 g de palladium ou de palladium et d'un ou plusieurs autres métaux du groupe VIII pour 100 g du poids total de métaux et de support et, de préférence, au moins égale à environ 1 g. De même, cette proportion ne doit généralement pas dépasser environ 10 g de palladium ou de palladium et d'un ou plusieurs autres métaux du groupe VIII pour 100 g du poids total de métaux et de support et, de préférence, ne pas dépasser environ 5 g.

Le support du catalyseur comprend, selon l'invention, au moins un composé choisi parmi le carbone et les oxydes inorganiques. Par carbone, on entend désigner, notamment, le charbon minéral ou le charbon de bois ainsi que le noir de carbone obtenu par transformation d'une matière organique. Par oxydes inorganiques, on vise, notamment, les oxydes de métaux alcalino-terreux, les oxydes de zirconium, d'aluminium et de silicium.

Lorsque le support du catalyseur contient un sulfate de métal alcalino-terreux, le sulfate de baryum est préféré.

Dans une variante au procédé selon l'invention qui est préférée, la phase liquide est rendue acide par l'addition d'un acide inorganique. Comme acides qui conviennent bien, on peut citer l'acide sulfurique et l'acide orthophosphorique. Le pH de la phase liquide est généralement supérieur ou égal à 0 et, de préférence, à environ 0,5. Il ne dépasse généralement pas environ 4 et, de préférence, environ 1,5.

Outre leurs propriétés catalytiques pour la réaction de synthèse directe du peroxyde d'hydrogène, les catalyseurs au palladium peuvent aussi décomposer le peroxyde formé. Il peut dès lors être avantageux que la phase liquide contienne un composé capable d'empoisonner les sites de décomposition du peroxyde d'hydrogène présents à la surface du catalyseur. Les ions halogénures sont de bons représentants de ces composés. Leur concentration optimale doit être déterminée au moyen d'essais de laboratoire à la portée de l'homme du métier. Cette concentration doit être suffisante pour parvenir à empoisonner la majorité des sites de décomposition du catalyseur et, dans le même temps, pas trop élevée de façon à éviter autant que faire se peut la réaction d'oxydation de l'ion halogénure par le peroxyde d'hydrogène. Les ions chlorure, bromure et iodure conviennent pour inhiber les sites de décomposition du catalyseur. L'ion bromure a donné d'excellents résultats en concentration d'au moins environ 10⁻⁶ ion-gramme par litre de phase liquide et, de préférence, d'au moins environ 10⁻⁵ ion-gramme. De même, les meilleurs résultats ont été obtenus avec l'ion bromure en concentration ne dépassant pas environ 10⁻¹ et, de préférence, environ 10⁻² ion-gramme par litre.

Selon l'invention, le réacteur à lit fixe arrosé utilisé dans le procédé, peut présenter toutes formes et dimensions généralement rencontrées pour la réalisation de ce type de réacteurs. Les conditions opératoires et le dimensionnement du réacteur seront adaptés à la pureté des réactifs mis en oeuvre et à l'efficacité du catalyseur employé. De préférence, on veillera à ce que la sécurité du fonctionnement soit maximale en évitant de mélanger de grands volumes d'hydrogène et d'oxygène gazeux alors que la composition gazeuse obtenue se situe dans la zone d'explosibilité.

De préférence, on choisira un réacteur à lit fixe arrosé de forme tubulaire. La longueur du tube constituant ce réacteur peut avantageusement être choisie supérieure ou égale à environ 0,5 m et, de préférence, supérieure ou égale à environ 1 m. Il est également intéressant que la longueur du réacteur tubulaire ne dépasse pas environ 6 m et, de préférence, pas environ 5 m.

Lorsque l'on choisit un réacteur tubulaire, il est avantageux que le diamètre intérieur du tube soit supérieur ou égal à environ 5 mm et, de préférence, supérieur ou égal à environ 7 mm. De même, il convient que ce diamètre ne dépasse pas environ 30 mm et, de préférence, pas environ 15 mm.

Dans le procédé selon l'invention, le débit liquide ruisselant du haut vers le bas du réacteur est généralement supérieur ou égal à environ 0,1 l/h et, le plus souvent supérieur ou égal à environ 0,4 l/h. Il est également souhaitable que ce débit ne dépasse pas environ 50 l/h et, de préférence, pas environ 10 l/h.

Les débits d'hydrogène et d'oxygène gazeux du procédé selon l'invention seront avantageusement réglés de manière telle que la composition du mélange gazeux sortant du réacteur se situe en dehors de la zone d'explosibilité.

Dans le procédé selon l'invention, on règle le débit gazeux et le débit liquide (exprimés en l/h dans les conditions normales de pression de 1 atmosphère et de température de 0 °C) de façon telle que le rapport débit gazeux/débit liquide soit au moins égal à environ 500 et, de préférence, à environ 3000. Par débit gazeux, on entend désigner la somme des débits gazeux d'hydrogène, d'oxygène et éventuellement de gaz inerte qui alimentent le réacteur. De même, on règle le rapport débit gazeux/débit liquide de manière telle qu'il ne dépasse pas environ 10000 et, de préférence environ 6000.

Selon l'invention, le lit fixe garnissant le réacteur à lit fixe arrosé est constitué d'un empilage de particules solides de catalyseur. Il est généralement avantageux que le diamètre moyen de ces particules soit au moins égal à environ 10 µm et, de préférence, à environ 100 µm. De même, il est souvent souhaitable que ce diamètre moyen ne dépasse pas environ 5000 µm et, de préférence, environ 1000 µm.

La température et la pression régnant à l'intérieur du réacteur seront soigneusement réglées pour optimiser la sélectivité de la réaction par rapport à l'hydrogène consolé et la productivité en peroxyde d'hydrogène.

Généralement, une température d'au moins environ 0 °C et, de préférence, d'au moins environ 25 °C convient bien. De même, une température ne dépassant pas environ 90 °C et, de préférence, environ 70 °C est habituellement suffisante pour obtenir de bons résultats.

En ce qui concerne la pression, il est habituel de choisir une pression au moins égale à la pression atmosphérique et, de préférence, d'au moins environ 50 bar. De même, il est souvent adéquat de régler la pression en-dessous d'environ 200 bar et, de préférence, en-dessous d'environ 150 bar.

L'invention concerne aussi l'utilisation du procédé décrit ci-dessus pour la production d'une solution aqueuse de peroxyde d'hydrogène de concentration supérieure à 0,3 g H₂O₂/100 g de solution et, le plus souvent, supérieure à 0,5 g H₂O₂/100 g de solution.

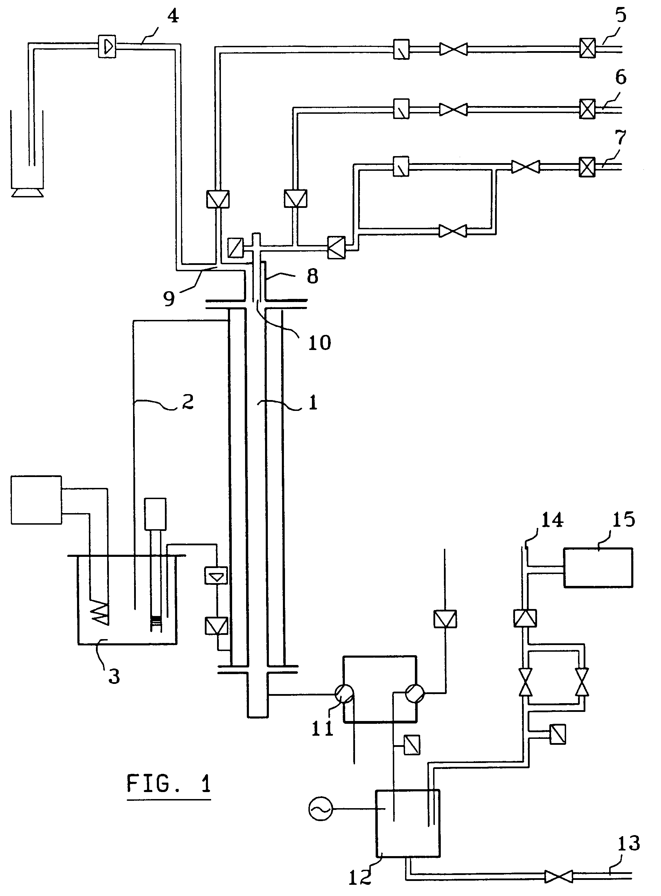

Un exemple de réacteur utilisable dans le procédé selon l'invention a été schématisé à la figure 1 et est constitué d'un tube (1) en acier inoxydable passivé de qualité HASTELLOY C, de diamètre intérieur de 10,3 mm et d'une longueur de 1200 mm. Ce réacteur est muni d'une double enveloppe dans laquelle on fait circuler un liquide réfrigérant (2) permettant d'éliminer la chaleur dégagée par la réaction et refroidi par le cryostat (3).

Dans un tel réacteur, l'alimentation des réactifs gazeux hydrogène (5) et oxygène (6) ainsi que de gaz inerte (7) utilisé comme diluant se réalise à co-courant avec le liquide en amont de la partie supérieure (8) du réacteur disposé verticalement. L'utilisation d'un gaz inerte permet, outre son rôle de diluant, d'ajuster progressivement les quantités de réactifs lors du démarrage et de l'arrêt du réacteur.

L'hydrogène est introduit dans la phase liquide (9), puis ajouté aux autres gaz dans la tête (10) du réacteur conçue de façon à maintenir un ciel gazeux de volume quasi négligeable.

Une vanne à quatre voies (11) permet le prélèvement d'échantillons destinés au dosage de l'H₂O₂ formé. Le mélange des gaz et du liquide quittant le réacteur est introduit dans un séparateur (12) muni d'un régulateur de niveau réglé de manière à y maintenir un ciel gazeux de volume aussi petit que possible. Le liquide est collecté par la canalisation (13) et son poids mesuré au moyen d'une balance. Les effluents gazeux ont été évacués par la canalisation (14) et peuvent être analysés par chromatographie en phase gazeuse (15).

Les exemples qui suivent sont donnés pour illustrer l'invention, sans pour autant en limiter sa portée.

L'exemple 1R est donné à titre de comparaison et n'est pas conforme à l'invention. L'exemple 2 a été réalisé conformément à l'invention.

### Exemple 1R : (non conforme à l'invention)

Dans un tube à essai en verre on a pesé 750 mg de catalyseur constitué d'un feutre de carbone imprégné de Pd (poids total de Pd = 1,5 mg) et on a ajouté 40 ml d'une solution aqueuse 0,1 N en HCl.

On a introduit le tube à essai dans un autoclave thermostatisé à 10 °C et on y a placé un barreau magnétique enrobé de polytétrafluoréthylène en guise d'agitateur. On a ensuite plongé dans le tube à essai un thermocouple et un tube souple en polytétrafluoréthylène destiné à l'alimentation en gaz.

Après avoir fermé l'autoclave, on a admis en mélange l'hydrogène sous une pression de 34 bar et l'oxygène sous une pression de 70 bar.

Dix minutes après l'admission des gaz, une explosion violente est survenue et a détruit le tube à essai et l'autoclave.

### Exemple 2 : (conforme à l'invention)

### Synthèse de longue durée en réacteur en lit fixe arrosé

On a fait usage d'un réacteur identique à celui de la figure 1.

Le volume utile du réacteur de la figure 1 était d'environ 0,1 l. On a complètement rempli le réacteur avec 40 g d'un catalyseur de Pd supporté sur des granules de charbon actif de diamètre moyen compris entre 150 et 250 µm à raison de 2 % en poids de Pd par rapport au poids total des granules de catalyseur. Ce catalyseur a été préparé préalablement à la synthèse par neutralisation d'une solution acide de PdCl₂ contenant des granules de charbon actif de marque CECA NC35 en suspension, puis séchage des granules et réduction à 150 °C dans un courant gazeux constitué d'un mélange d'hydrogène et d'azote.

Durant toute la durée de l'essai continu qui s'est déroulé sans incidents sur une période de 4 jours, on a maintenu la pression à 60 bar et la température à 52 °C. On a alimenté le réacteur au moyen d'un débit liquide (4) d'eau acide 0,1 M en H₂SO₄ et 0 à 0,001 M en NaBr. Le débit de liquide a varié au cours de l'essai entre 0,45 et 1,14 l/h.

Le débit d'oxygène a été fixé à 15 l/min (dans les conditions normales de température de 0 °C et de pression de 1 atmosphère), le débit d'hydrogène a varié entre 1,2 et 1,5 l/min dans les conditions normales et le débit d'azote entre 8 et 10 l/min dans les conditions normales.

Les différents débits ont été mesurés et enregistrés en continu pendant toute la durée de l'essai. Un système de sécurité automatique a été installé pour déclencher une alarme en cas de valeurs anormales, de même que la mise sous azote du réacteur et la coupure des alimentations en oxygène et en hydrogène.

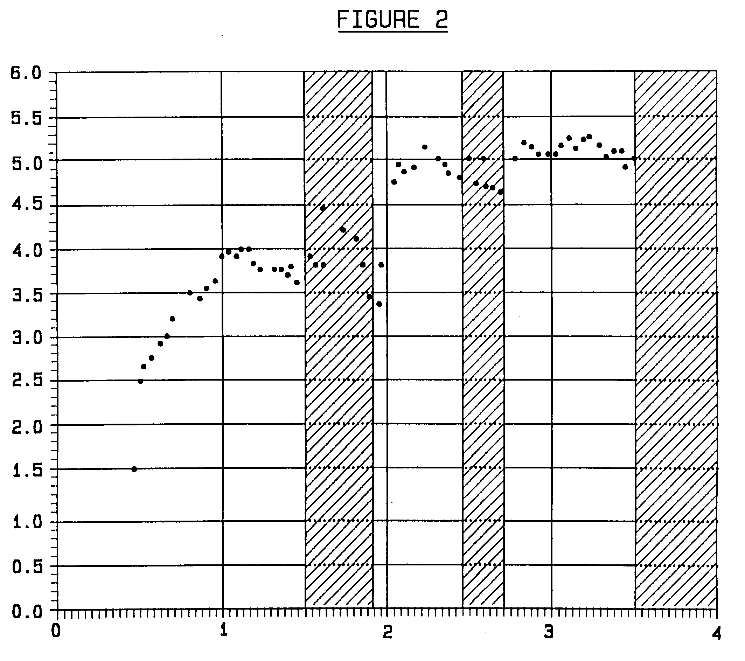

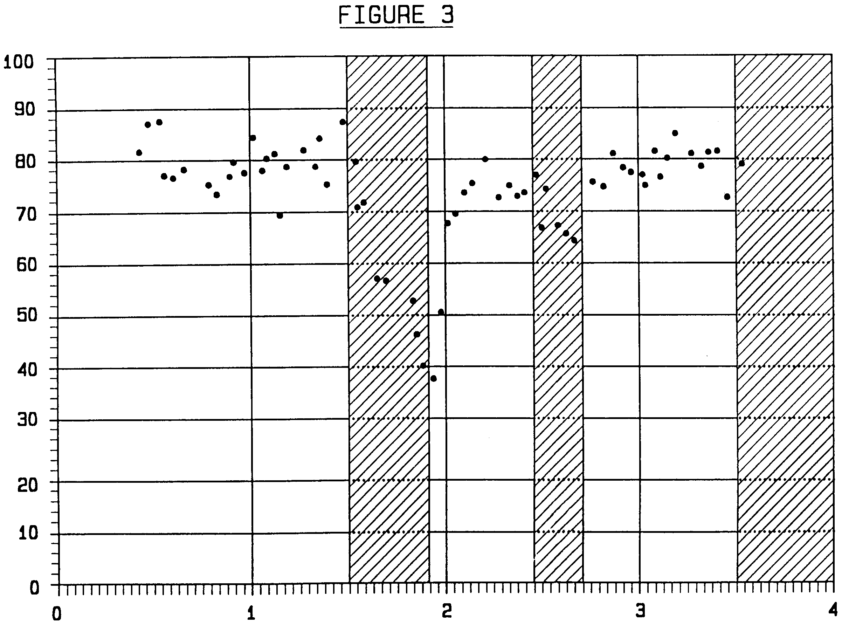

Les mesures de la concentration en H₂O₂ à la sortie du réacteur (en g H₂O₂/100g de solution) et la détermination de la sélectivité (en moles %) de la réaction par rapport à l'hydrogène consommé lors d'un essai continu durant 4 jours ont été représentées aux diagrammes des figures 2 et 3, la figure 2 donnant les concentrations en H₂O₂ et la figure 3 les sélectivités, les abscisses de ces deux diagrammes représentant la durée de l'essai graduée en jours. Les périodes figurant en hachuré correspondent à une alimentation du réacteur avec une phase liquide exempte de NaBr.

Ces résultats montrent qu'il est possible dans ces conditions d'atteindre une concentration en H₂O₂ de 5 % en poids avec une sélectivité de 80 % molaire par rapport à l'hydrogène consommé.

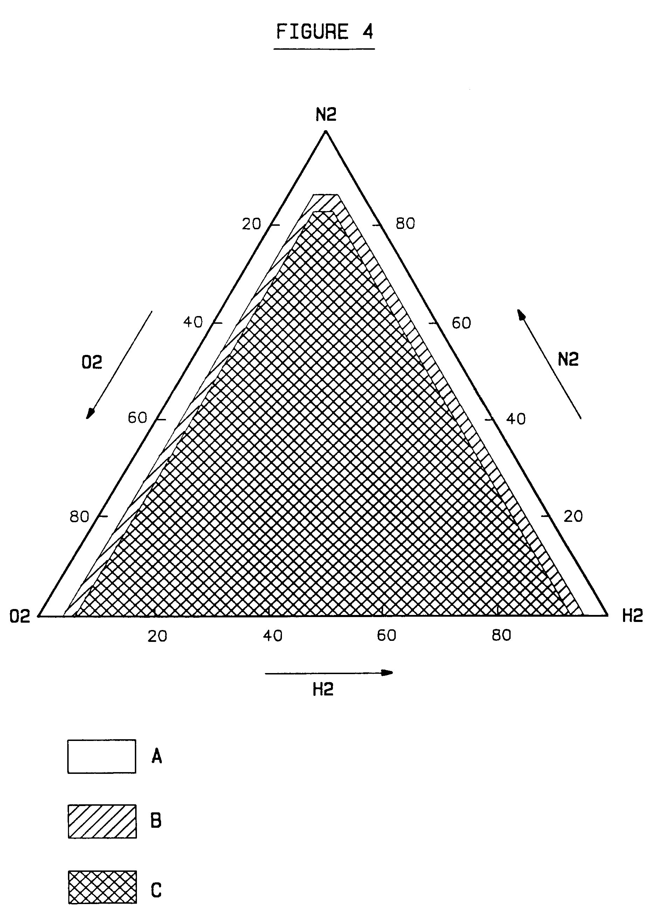

Dans le cas d'une concentration de 5 % en poids d'H₂O₂ à la sortie du réacteur et avec un débit liquide moyen de 0,8 l/h, on a consommé 25 à 35 % de l'hydrogène mis en oeuvre dans l'alimentation. Il s'ensuit que le mélange gazeux à la sortie du réacteur se situe hors du domaine d'explosibilité, comme on peut le déduire de la composition résultante du mélange gazeux et de la figure 4. Cette figure est un diagramme ternaire représentant les mélanges des trois gaz O₂, H₂ et N₂ et leur risques d'explosibilité dans des conditions de température comprises entre 120 et 200 °C et de pression comprises entre 30 et 60 bar. La zone A du diagramme représente les compositions ininflammables, la zone C celle des compositions explosives et la zone B, celle des compositions proches de la limite d'inflammabilité.

## Revendications

1. Procédé pour la fabrication d'une solution aqueuse de peroxyde d'hydrogène par synthèse directe à partir d'hydrogène et d'oxygène dans un système triphasique selon lequel on fait réagir directement en continu l'hydrogène et l'oxygène à l'état gazeux à la surface d'un catalyseur hétérogène solide dans un réacteur à lit fixe arrosé ("trickle bed") rempli de particules solides du catalyseur constituant le lit fixe au travers duquel on fait ruisseler à co-courants un liquide constitué d'une solution aqueuse et la phase gazeuse contenant l'hydrogène et l'oxygène, caractérisé en ce que le rapport du débit gazeux au débit liquide n'est pas inférieur à 500 et ne dépasse pas 10000.

2. Procédé selon la revendication 1, caractérisé en ce que le réacteur est de forme tubulaire et présente une longueur de 0,5 à 6 m.

3. Procédé selon la revendication 1 ou 2, caractérisé en ce que le réacteur présente un diamètre intérieur de 5 à 30 mm.

4. Procédé selon l'une quelconque des revendications 1 à 3, caractérisé en ce que le débit liquide est de 0,1 à 50 l/h.

5. Procédé selon l'une quelconque des revendications 1 à 4, caractérisé en ce que les débits d'hydrogène et d'oxygène gazeux sont réglés de manière que la composition du mélange gazeux sortant du réacteur se situe en dehors de la zone d'explosibilité.

6. Procédé selon l'une quelconque des revendications 1 à 5, caractérisé en ce que le diamètre moyen des particules solides de catalyseur constituant le lit fixe est au moins égal à 10 µm et ne dépasse pas 5000 µm.

7. Procédé selon l'une quelconque des revendications 1 à 6, caractérisé en ce que le lit fixe est constitué de particules solides de catalyseur d'au moins un métal du groupe VIII imprégné sur un support comprenant du carbone, un oxyde inorganique ou un sulfate de métal alcalino-terreux.

8. Procédé selon l'une quelconque des revendications 1 à 7, caractérisé en ce que, dans le réacteur, la température est de 0 à 90 °C et la pression est égale ou supérieure à la pression atmosphérique et inférieure à 200 bar.

9. Utilisation du procédé selon l'une quelconque des revendications 1 à 8 pour la production d'une solution aqueuse de peroxyde d'hydrogène de concentration d'au moins 0,5 g H₂O₂/100 g de solution.

## Claims

1. Process for the manufacture of an aqueous solution of hydrogen peroxide by direct synthesis from hydrogen and oxygen in a three-phase system, according to which hydrogen and oxygen are reacted directly and continuously in the gaseous state at the surface of a solid heterogeneous catalyst in a reactor with a stationary trickle bed filled with solid catalyst particles forming the stationary bed through which a liquid consisting of an aqueous solution and the gas phase containing the hydrogen and oxygen are made to trickle concurrently, characterised in that the ratio of the gas flow rate to the liquid flow rate is not lower than 500 and does not exceed 10,000.

2. Process according to Claim 1, characterised in that the reactor is of tubular shape and has a length of 0.5 to 6 m.

3. Process according to Claim 1 or 2, characterised in that the reactor has an internal diameter of 5 to 30 mm.

4. Process according to any one of Claims 1 to 3, characterised in that the liquid flow rate is from 0.1 to 50 l/h.

5. Process according to any one of Claims 1 to 4, characterised in that the flow rates of gaseous hydrogen and oxygen are regulated so that the composition of the gas mixture leaving the reactor lies outside the explosiveness region.

6. Process according to any one of Claims 1 to 5, characterised in that the average diameter of the solid catalyst particles forming the stationary bed is at least 10 µm and does not exceed 5,000 µm.

7. Process according to any one of Claims 1 to 6, characterised in that the stationary bed consists of solid catalyst particles of at least one group VIII metal impregnated onto a support comprising carbon, an inorganic oxide or an alkaline-earth metal sulphate.

8. Process according to any one of Claims 1 to 7, characterised in that in the reactor the temperature is from 0 to 90°C and the pressure is equal to or higher than atmospheric pressure and lower than 200 bars.

9. Use of the process according to any one of Claims 1 to 8 for the production of an aqueous solution of hydrogen peroxide at a concentration of at least 0.5 g H₂O₂/100 g of solution.

## Patentansprüche

1. Verfahren zur Herstellung einer wäßrigen Lösung von Wasserstoffperoxid durch direkte Synthese aus Wasserstoff und Sauerstoff in einem dreiphasigen System, gemäß dem man Wasserstoff und Sauerstoff in gasförmigem Zustand an der Oberfläche eines festen heterogenen Katalysators in einem Rieselfestbettreaktor ("trickle bed"), der mit festen Teilchen des Katalysators, der das Festbett bildet, gefüllt ist, direkt kontinuierlich reagieren läßt, durch welches [Festbett] man eine Flüssigkeit, die aus einer wäßrigen Lösung besteht, und die Gasphase, die Wasserstoff und Sauerstoff enthält, im Gleichstrom rieseln läßt, dadurch gekennzeichnet, daß das Verhältnis des Gasdurchsatzes zum Flüssigkeitsdurchsatz nicht kleiner als 500 ist und 10000 nicht übersteigt.

2. Verfahren gemäß Anspruch 1, dadurch gekennzeichnet, daß der Reaktor röhrenförmig ist und eine Länge von 0,5 bis 6 m aufweist.

3. Verfahren gemäß Anspruch 1 oder 2, dadurch gekennzeichnet, daß der Reaktor einen Innendurchmesser von 5 bis 30 mm aufweist.

4. Verfahren gemäß einem der Ansprüche 1 bis 3, dadurch gekennzeichnet, daß der Flüssigkeitsdurchsatz 0,1 bis 50 l/h beträgt.

5. Verfahren gemäß einem der Ansprüche 1 bis 4, dadurch gekennzeichnet, daß die Wasserstoff- und Sauerstoffgasdurchsätze so eingestellt werden, daß die Zusammensetzung des Gasgemischs, das den Reaktor verläßt, außerhalb des Explosionsbereichs liegt.

6. Verfahren gemäß einem der Ansprüche 1 bis 5, dadurch gekennzeichnet, daß der mittlere Durchmesser der festen Katalysatorteilchen, die das Festbett bilden, wenigstens gleich 10 µm ist und 5000 µm nicht überschreitet.

7. Verfahren gemäß einem der Ansprüche 1 bis 6, dadurch gekennzeichnet, daß das Festbett aus festen Katalysatorteilchen aus wenigstens einem Metall der Gruppe VIII, das auf einen Träger, der Kohlenstoff, ein anorganisches Oxid oder ein Erdalkalimetallsulfat umfaßt, aufgebracht ist, besteht.

8. Verfahren gemäß einem der Ansprüche 1 bis 7, dadurch gekennzeichnet, daß die Temperatur im Reaktor 0 bis 90 °C beträgt und der Druck gleich oder größer als der Atmosphärendruck und kleiner als 200 bar ist.

9. Verwendung des Verfahrens gemäß einem der Ansprüche 1 bis 8 zur Herstellung einer wäßrigen Lösung von Wasserstoffperoxid mit einer Konzentration von wenigstens 0,5g H₂O₂/100 g Lösung.
